# EUROPÄISCHE PATENTSCHRIFT

(11) **EP 2 954 998 B1**
(45) Veröffentlichungstag und Bekanntmachung des Hinweises auf die Patenterteilung: **03.11.2021**
(21) Anmeldenummer: 15001636.8
(22) Anmeldetag: 02.06.2015
(51) Int. Cl.: B29C 45/37, B29C 33/38, B29C 33/42, B29C 64/106, D21F 1/44

(54) **SPRITZGUSSWERKZEUG UND PRÄGESTOCK ZUM EINSATZ BEI DER HERSTELLUNG VON WASSERZEICHENPAPIER**
INJECTION MOULDING TOOL AND IMPRINTING STICK FOR USE IN THE MANUFACTURE OF WATERMARK PAPER
OUTIL DE MOULAGE PAR INJECTION EMPORTE-PIÈCE À DISPOSITIF ESTAMPEUR UTILISÉ LORS DE LA FABRICATION DE PAPIER FILIGRANE

(30) Priorität: 12.06.2014 DE 102014008752
(43) Veröffentlichungstag der Anmeldung: 16.12.2015
(73) Patentinhaber: Giesecke+Devrient Currency Technology GmbH, 81677 München (DE)
(72) Erfinder: Gerhardt, Thomas, 81549 München (DE); Aigner, Andreas, 83626 Valley (DE); Braun, Andreas, 80798 München (DE); Hänelt, Andreas, 83730 Fischbachau (DE); Pfeiffer, Matthias, 81675 München (DE); Stumbeck, Bernd, 83666 Waakirchen (DE); Wiedner, Bernhard, 83714 Miesbach (DE)
(74) Vertreter: Zeuner Summerer Stütz

(56) Entgegenhaltungen:
- WO-A1-2014/015978
- WO-A1-2014/040706
- DE-A1-102006 058 513
- US-A1- 2003 206 820
- GEBHARDT A: "RAPID TOOLING DER SCHNELLE WEG ZUM SPRITZGIESSWERKZEUG", KUNSTOFFE, CARL HANSER VERLAG, MUNCHEN, DE, Bd. 88, Nr. 11, 1. November 1998 (1998-11-01), Seite 1992, XP000906260, ISSN: 0023-5563

## Beschreibung

Die Erfindung betrifft die Herstellung von Wasserzeichenpapier und betrifft insbesondere ein Spritzgusswerkzeug zur Erzeugung eines Wasserzeicheneinsatzes mit einem hochauflösenden, mehrstufigen Spritzgussrelief und einen Prägestock zur Erzeugung einer hochauflösenden, mehrstufigen Siebprägung in einem Entwässerungssieb. Die Erfindung betrifft auch zugehörige Herstellungsverfahren für ein Spritzgusswerkzeug und einen Prägestock, sowie Entwässerungssiebe für die Herstellung von Wasserzeichenpapier, deren Wasserzeicheneinsatz oder Siebprägung mit einem genannten Spritzgusswerkzeug bzw. Prägestock erzeugt sind.

Bei der Papierherstellung auf Rundsiebmaschinen oder Langsiebmaschinen lagert sich Papiermasse kontinuierlich auf einem bewegten Entwässerungssieb an und wird soweit verfestigt, dass sie als feuchte Papierbahn zur Weiterbearbeitung vom Entwässerungssieb abgezogen werden kann. Vor allem Sicherheitspapiere für Banknoten, Ausweisdokumente und dergleichen werden zur Absicherung oft mit Wasserzeichen ausgestattet, die eine Überprüfung der Echtheit des Sicherheitspapiers gestatten und die zugleich als Schutz vor unerlaubter Reproduktion dienen.

Zur Herstellung von Wasserzeichenpapier werden typischerweise Bronzesiebgewebe mit Messingprägestempeln in Reliefform gebracht, um bei der Papierherstellung unterschiedliche Ablagerungsschichtdicken der Fasern zu erhalten. Diese führen zu einem strukturierten Halbtonbild in Durchsicht, dem sogenannten Wasserzeichen. Um Wasserzeichen höherer Genauigkeit zu erhalten, ist es auch bekannt, die Spritzgusstechnologie mit anschließender Laserlochung der Spritzlinge für die Entwässerung einzusetzen, um Wasserzeicheneinsätze mit einem hochgenauen Spritzgussrelief zu erzeugen.

Die Druckschrift WO 2014/040706 A1 offenbart ein Spritzgusswerkzeug und einen entsprechenden Prozess zur Erzeugung eines Wasserzeicheneinsatzes in einem Entwässerungssieb.

Ausgehend davon liegt der Erfindung die Aufgabe zugrunde, geeignete Vorrichtungen und Verfahren für die Herstellung von Entwässerungssieben einschließlich der Wasserzeicheneinsätze bereitstellen, die die Herstellung von Papier mit mehrstufigen Wasserzeichen hoher Detailgenauigkeit und mit hohem Kontrast ermöglicht.

Diese Aufgabe wird durch die Merkmale der unabhängigen Ansprüche gelöst. Weiterbildungen der Erfindung sind Gegenstand der Unteransprüche.

Die Erfindung enthält in einem Aspekt ein Spritzgusswerkzeug zur Erzeugung eines Wasserzeicheneinsatzes mit einem hochauflösenden, mehrstufigen Spritzgussrelief, wobei das Spritzgusswerkzeug eine Spritzgusskavität enthält, in die zur Erzeugung des Wasserzeichensatzes Kunststoff einspritzbar ist und die mit einem hochauflösenden, mehrstufigen Wasserzeichenrelief in Form des invertierten Spritzgussreliefs versehen ist. Das Spritzgusswerkzeug einschließlich der Spritzgusskavität und des hochauflösenden, mehrstufigen Wasserzeichenreliefs ist durch ein additives Fertigungsverfahren als Schichtenfolge einer Mehrzahl fest miteinander verbundener Materialschichten gebildet.

Die Erfindung enthält in einem weiteren Aspekt einen Prägestock zur Erzeugung einer hochauflösenden, mehrstufigen Siebprägung in einem Entwässerungssieb für die Herstellung von Wasserzeichenpapier, wobei der Prägestock mit einem hochauflösenden, mehrstufigen Wasserzeichenrelief in Form der invertierten Siebprägung versehen ist. Der Prägestock einschließlich des hochauflösenden, mehrstufigen Wasserzeichenreliefs ist durch ein additives Fertigungsverfahren als Schichtenfolge einer Mehrzahl fest miteinander verbundener Materialschichten gebildet.

Die Erfindung geht dabei von der Beobachtung der Erfinder aus, dass die derzeitige Prägetechnologie von Geweben aller Art, insbesondere der eingangs genannten Varianten für die Wasserzeichenherstellung, in ihrer Genauigkeit durch den Herstellungsprozess der entsprechenden Prägewerkzeuge mittels abtragender Verfahren, beispielsweise der Fräsung eines metallischen Prägestempels begrenzt ist. Die erzielbare Genauigkeit der erzeugten Wasserzeichen ist demnach durch die Genauigkeit begrenzt, mit der die entsprechenden Werkzeuge, nämlich das Spritzgusswerkzeug zur Erzeugung eines Wasserzeichen-Spritzlings und der Prägestock für die Siebprägung hergestellt werden können.

Beispielsweise kann bei der Erzeugung eines Messingprägestempels zur Höhenstrukturierung eines Bronzesiebes mit Hilfe eines Lasers der selektive Materialabtrag bei ausreichend hoher Relieftiefe nur mit begrenzter Genauigkeit erfolgen. Auch beim Spritzgussverfahren für die Wasserzeichenherstellung ist die erzielbare Reliefgenauigkeit des Spritzlings nach Erkenntnis der Erfinder durch die Genauigkeit der Fräsung der Prägestöcke begrenzt.

Die Erfinder haben nun gefunden, dass sich diese Begrenzungen durch den Einsatz additiver Fertigungsverfahren für die Herstellung der genannten Wasserzeichen-Werkzeuge überwinden lassen. Gegenüber herkömmlichen abtragenden Verfahren können mit additiven Fertigungsverfahren Wasserzeichen-Werkzeuge hergestellt werden, die hochauflösende, mehrstufige Wasserzeichenreliefs mit hohem Detailreichtum und hohem Kontrast aufweisen. Diese vorteilhaften Eigenschaften werden dann beim Spitzguss und beim Prägevorgang von den Wasserzeichenreliefs der Wasserzeichen-Werkzeuge auf das Spritzgussrelief des Wasserzeicheneinsatzes bzw. die Siebprägung des Trägersiebs und damit schließlich auch auf das damit hergestellte Wasserzeichenpapier übertragen.

Nachfolgend wird auch der Begriff Wasserzeichen-Werkzeug als Oberbegriff für das Spritzgusswerkzeug zur Erzeugung eines Wasserzeicheneinsatzes und den Prägestock zur Erzeugung einer Siebprägung in einem Entwässerungssieb verwendet.

In einer bevorzugten Ausgestaltung weist das hochauflösende, mehrstufige Wasserzeichenrelief des Wasserzeichen-Werkzeugs, also des Spritzgusswerkzeugs oder des Prägestocks, Erhebungen und Vertiefungen mit scharfen Rändern einer Randbreite von 0,6 mm oder weniger, bevorzugt 0,5 mm oder weniger, besonders bevorzugt 0,4 mm oder weniger auf. Die Randbreite ist dabei diejenige Breite, innerhalb der die Höhe einer Erhebung von 90% der Maximalhöhe auf 10% abfällt, oder innerhalb der die Tiefe einer Vertiefung von 90% der Maximaltiefe auf 10% ansteigt.

Das hochauflösende, mehrstufige Wasserzeichenrelief des Wasserzeichen-Werkzeugs weist mit besonderem Vorteil eine mittlere Ortsfrequenz von 0,8 Lp/mm oder mehr, vorzugsweise von 2 Lp/mm bis 3 Lp/mm oder mehr auf. Die Ortsfrequenz stellt dabei ein Maß zur Quantifizierung der Bildschärfe dar. Sie gibt an, wie viele schwarz/weiße Linienpaare pro Längeneinheit maximal auflösbar sind, und wird üblicherweise in der Einheit Lp/mm (Linienpaare pro Millimeter) angegeben. Eine hohe Bildschärfe entspricht dabei einer hohen Ortsfrequenz, eine niedrige Bildschärfe einer niedrigen Ortsfrequenz. Die Bezeichnung "mittlere Ortsfrequenz" trägt der Tatsache Rechnung, dass die Ortsfrequenz nicht im gesamten Bereich des Wasserzeichenreliefs konstant sein muss.

Weiter weist das hochauflösende, mehrstufige Wasserzeichenrelief des Wasserzeichen-Werkzeugs mit Vorteil Bildelemente einer minimalen Größe von 0,6 mm x 0,6 mm oder weniger, vorzugsweise von 0,5 mm x 0,5 mm oder weniger, besonders bevorzugt von 0,4 mm x 0,4 mm oder weniger auf. Auch wenn die konkrete Form der Bildelemente von dem jeweils dargestellten Bildinhalt abhängt, ist die minimale Größe der Bildelemente stets durch die Ortsfrequenz vorgegeben. Die Bildelemente selbst müssen dabei nicht quadratisch sein, sondern können allgemeine Formen, beispielsweise lineare, runde, ovale, polygonale, gewellte oder auch unregelmäßige Formen aufweisen. Da die minimale Ausdehnung allerdings in jeder Dimension gleich ist, kann die oben genannte minimale Größe für die Bildelemente nicht unterschritten werden.

Das Wasserzeichen-Werkzeug ist mit Vorteil als Schichtenfolge einer Mehrzahl fest miteinander verbundener Metallschichten gebildet. Vorteilhafte Materialien für die Materialschichten des Wasserzeichen-Werkzeugs sind Al, Ti, Fe, Ni, Mg, Cu, Bronze, Messing, Edelstahl, Legierungen mit Cr-Co-Mo und Keramiken. Eingesetzte Metalle sind vorteilhaft rostfrei, über eine reine Passivierung hinaus nicht oxidationsanfällig und neigen in einer Siebumgebung nicht zur Bildung galvanischer Elemente. Auch Kunststoffe können eingesetzt werden, wobei diese vorteilhaft abriebfest und dennoch hinreichend flexibel und hydrolysebeständig sind. Beispiele solcher vorteilhafter Kunststoffe sind Polyamid und PEEK.

Die Reliefhöhe des Spritzgusswerkzeugs bzw. des Prägestocks liegt zwischen 0,01 mm und 100 mm, vorzugsweise zwischen 1 mm und 2 mm. Die Erfindung enthält auch ein Verfahren zum Herstellen eines Spritzgusswerkzeugs der beschriebenen Art, bei dem das Spritzgusswerkzeug einschließlich der Spritzgusskavität und des hochauflösenden, mehrstufigen Wasserzeichenreliefs durch ein additives Fertigungsverfahren im Schichtbauverfahren gebildet wird. Die Erfindung enthält weiter ein Verfahren zum Herstellen eines Prägestocks der beschriebenen Art, bei dem der Prägestock einschließlich des hochauflösenden, mehrstufigen Wasserzeichenreliefs durch ein additives Fertigungsverfahren im Schichtbauverfahren gebildet wird.

Das Wasserzeichen-Werkzeug wird dabei mit Vorteil aus einem drahtförmigen, pulverförmigen oder folienförmigen Ausgangsmaterial, aus einer photosensiblen Paste oder einer Flüssigkeit gebildet. Als additives Fertigungsverfahren kommen insbesondere Selektives Lasersintern, Selektives Laserschmelzen, Elektronenstrahlschmelzen, 3D-Druck mit Pulver, Schmelzschichtung, Laserauftragsschweißen, Multi-Jet-Modeling, ein Polyjet-Verfahren, Stereolithographie, Laminated Object Modeling, Film Transfer Imaging oder Digital Light Processing in Betracht.

Der Einsatz eines additiven Fertigungsverfahrens erlaubt die Herstellung von Wasserzeichenreliefs mit neuen Geometrien, insbesondere von Reliefstrukturen mit "echten" rechten Winkeln in z-Richtung. Während abtragende Fertigungsverfahren prinzipbedingt keine scharfen Übergänge von senkrechten zu waagrechten Strukturen erzeugen können, sondern stets einen gerundeten Übergangsbereich mit einem typischen Radius von etwa 300 µm aufweisen und einen maximalen Winkel in z-Richtung von etwa 75° erreichen, können mit additiven Fertigungsverfahrens wesentlich schärfer definierte Strukturen mit einem Übergangsbereich von nur 10 µm bis 100 µm und Winkeln in z-Richtung von etwa 88° oder mehr, also praktisch "echten" rechten Winkeln erzeugt werden.

Weiter erlaubt die breite Palette von Materialien, die für die additiven Fertigungsverfahren zur Verfügung steht, den Einsatz neuer Materialien für die Wasserzeichen-Werkzeuge, welche insbesondere bezüglich ihrer Wärmeleitung, ihres Ablöseverhaltens und/oder ihrer Standzeit vorteilhaft gewählt werden können.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine Aufsicht auf ein Entwässerungssieb mit einem Wasserzeicheneinsatz,
- Fig. 2: einen Querschnitt des Entwässerungssiebs entlang der der Linie II-II von Fig. 1,
- Fig. 3: in (a) und (b) ein Spritzgusswerkzeug nach einem Ausführungsbeispiel der Erfindung,
- Fig. 4: ein Entwässerungssieb mit einer hochauflösenden, mehrstufigen Siebprägung, und
- Fig. 5: einen Prägestock nach einem Ausführungsbeispiel der Erfindung.

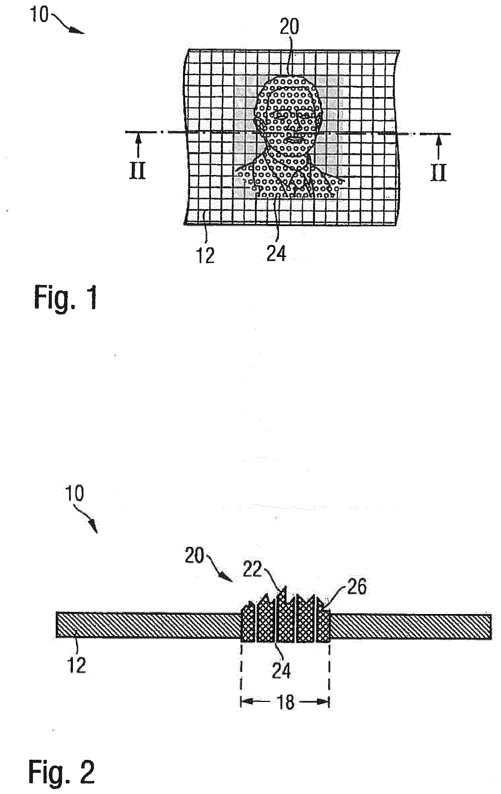

Die Erfindung wird nun am Beispiel von Entwässerungssieben für die Herstellung von Papier mit mehrstufigen Wasserzeichen erläutert. Figuren 1 und 2 zeigen schematisch ein Bronze-Entwässerungssieb 10 für die Herstellung von Banknotenpapier, wobei Fig. 1 das Entwässerungssieb 10 in Aufsicht und Fig. 2 einen Querschnitt entlang der der Linie II-II von Fig. 1 darstellt.

Das Entwässerungssieb 10 enthält ein Trägersieb mit einem Siebgewebe 12, das zumindest ein System von miteinander verwobenen in Längsrichtung verlaufenden Kettfäden und quer dazu verlaufenden Schussfäden aufweist. Im Ausführungsbeispiel ist das Siebgewebe 12 ein Metallgewebe, nämlich ein Bronzegewebe. Für die Erzeugung eines Wasserzeichens enthält das Entwässerungssieb 10 einen spritzgegossenen Wasserzeicheneinsatz 20, der im Bereich einer Aussparung 18 direkt in das Siebgewebe 12 des Entwässerungssiebs eingespritzt ist.

Der Wasserzeicheneinsatz 20 weist ein hochauflösendes, mehrstufiges Spritzgussrelief 22 auf, das eine sehr detailreiche Darstellung graphischer Motive, wie etwa des in Fig. 1 gezeigten Portraits erlaubt. Wie in Fig. 2 dargestellt, weisen die Erhebungen und Vertiefungen des Spritzgussreliefs 22 scharfe Ränder auf, wobei sogar rechte Winkel 26 möglich sind. Dadurch lassen sich auch filigrane Details im Wasserzeichen, wie etwa eine Pupille im Auge des Portraits der Fig. 1 darstellen.

Um bei der Papierherstellung die Entwässerung auch im Bereich des Wasserzeicheneinsatzes 20 sicherzustellen, ist dieser mit einer Vielzahl von Perforationen 24 versehen, deren Durchmesser so klein gewählt ist, dass in ihnen bei der Papierherstellung keine Fasern anhaften. Typische Perforationsdurchmesser liegen zwischen 50 µm und einigen 100 µm, beispielsweise bei etwa 500 µm.

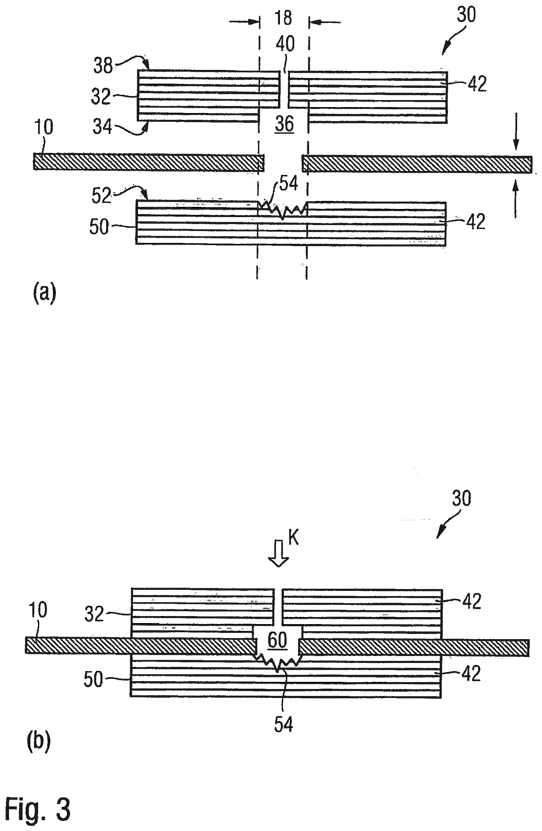

Für die Herstellung eines Wasserzeicheneinsatzes 20 mit einem hochauflösendem, mehrstufigem Spritzgussrelief 22 kommt erfindungsgemäß ein besonders hergestelltes Spritzgusswerkzeug 30 zum Einsatz, das mit Bezug auf die Figuren 3(a) und 3(b) näher beschrieben wird.

Das Spritzgusswerkzeug 30 enthält ein Düsenwerkzeug 32, das als Spritzgusswerkzeugoberteil dient und ein Reliefwerkzeug 50, das als Spritzgusswerkzeugunterteil dient. Das Düsenwerkzeug 32 ist in Form einer flachen Platte mit einer Ober- und einer Unterseite ausgebildet. An seiner Unterseite 34 ist in dem Düsenwerkzeug 32 eine Düsenwerkzeugkavität 36 ausgebildet, die mit einer an der Oberseite 38 des Düsenwerkzeugs 32 angeordneten Düsenöffnung 40 zum Einspritzen von Kunststoff in die Düsenwerkzeugkavität 36 verbunden ist. Das Reliefwerkzeug 50 ist ebenfalls in Form einer flachen Platte mit einer Ober- und einer Unterseite ausgebildet. An seiner Oberseite 52 ist das Reliefwerkzeug 50 mit einem hochauflösenden, mehrstufigen Wasserzeichenrelief 54 in Form des invertierten Spritzgussreliefs 22 versehen.

Nach dem Ausschneiden der Aussparung 18 aus dem Sieb 10 wird das Spritzgusswerkzeug 30 mit Düsenwerkzeug 32 und Reliefwerkzeug 50 an die ausgesparten Stellen des Entwässerungssiebs 10 verfahren, so dass das Düsenwerkzeug 32 oberhalb und das Reliefwerkzeug 50 deckungsgleich unterhalb der Aussparung 18 angeordnet sind. Dann werden die beiden Werkzeuge 32, 50 in vertikaler Richtung (Pfeile am rechten Bildrand) zusammengeführt, so dass sie das Entwässerungssieb 10 im Bereich der Aussparung 18 mit einem vorgegebenen Pressdruck zwischen sich aufnehmen.

Wie in Fig. 3(b) gezeigt, bildet das Spritzgusswerkzeug 30 dabei eine Spitzgusskavität 60 aus, die die Düsenwerkzeugkavität 36 und die Aussparung 18 des Entwässerungssiebs 10 umfasst und die an ihrer Unterseite von dem Wasserzeichenrelief 54 des Reliefwerkzeugs 50 begrenzt ist. Beim Einspritzen von Kunststoff in die Spitzgusskavität 60 (Pfeil K) entsteht so ein direkt in das Entwässerungssieb 10 eingespritzter Wasserzeicheneinsatz 20 mit dem gewünschten Spritzgussrelief 22. Nach dem Entfernen des Spritzgusswerkzeugs 30 enthält das Entwässerungssieb 10 einen Wasserzeicheneinsatz 20 mit dem gewünschten hochauflösenden Relief 22.

Das Spritzgusswerkzeug 30 ist nun einschließlich der Spritzgusskavität 60 und des hochauflösenden, mehrstufigen Wasserzeichenreliefs 54 durch ein additives Fertigungsverfahren als Schichtenfolge einer Mehrzahl fest miteinander verbundener Materialschichten 42 gebildet.

Als additive Fertigungsverfahren kommen dabei insbesondere Selektives Lasersintern, Selektives Laserschmelzen, Elektronenstrahlschmelzen, 3D-Druck mit Pulver, Schmelzschichtung, Laserauftragsschweißen, Multi-Jet-Modeling, ein PolyJet-Verfahren, Stereolithographie, Laminated Object Modeling, Film Transfer Imaging oder Digital Light Processing in Betracht. Je nach Fertigungsverfahren kann das Ausgangsmaterial dabei in Form von Draht, Pulver, Folien, Pasten oder Flüssigkeiten vorliegen.

Beispielhaft wird die Herstellung des Spritzgusswerkzeugs 30 mittels Selektivem Lasersintern (SLS) näher beschrieben. Gegenwärtig ist allerdings das Verfahren des Selektiven Laserschmelzens (SLM) besonders bevorzugt, welches weiter unten genauer dargestellt wird. Bei dem Verfahren des Selektiven Lasersinterns werden die einzelnen Schichten des Düsenwerkzeugs 32 und des Reliefwerkzeugs 50 aus einem Materialpulver, beispielsweise einem Metallpulver erzeugt. Das herzustellende Werkzeug 32, 50 wird zunächst mit seiner Form einschließlich des Bereichs der Spritzgusskavität 60 und des hochauflösenden, mehrstufigen Wasserzeichenreliefs 54 in einer CAD-Software als virtuelles Modell generiert. Das virtuelle Modell wird mit einem weiteren Computerprogramm in dünne Schichten unterteilt, die bei der physikalischen Fertigung nacheinander übereinanderliegend erzeugt werden.

Beim eigentlichen Schichtbauvorgang mittels Selektivem Lasersintern werden dann die einzelnen Materialpartikel eines als Ausgangsmaterial verwendeten Pulvers schichtweise durch einen Laser in den durch das virtuelle Modell vorgegebenen Bereichen nahe an ihre Schmelztemperatur gebracht, so dass die einzelnen Partikel an ihrer Oberfläche miteinander verschmelzen. Nach Abschluss einer Schicht wird die Bauplattform, auf der das Werkzeug 32, 50 aufgebaut wird, um die Dicke der erzeugten Schicht abgesenkt, wird aus einem Materialbehälter eine neue Pulverschicht verteilt und der Vorgang für die nachfolgende Schicht wiederholt, bis das gesamte Werkzeug gebildet ist. Das Werkzeug 32, 50 wird bei diesem Verfahren in einem Pulverbett hergestellt, so dass kein Stützmaterial erforderlich ist.

Da als Basismaterial ein Pulver verwendet wird, können die erzeugten Bauteile abhängig von der Größe der Materialpartikel eine raue Oberfläche aufweisen, die nach dem Herstellungsprozess durch eine Nachbearbeitung geglättet werden kann, beispielsweise durch Tränken mit flüssigem Kupfer oder Harz. Besondere Vorteile des Selektiven Lasersinterns umfassen neben den allgemeinen Vorteilen additiver Fertigungsverfahren, eine große Bandbreite verwendbarer Materialien, auch eine hohe thermische und mechanische Belastbarkeit der gefertigten Produkte.

Für die Herstellung des Düsenwerkzeugs 32 und des Reliefwerkzeugs 50 eignet sich insbesondere auch das Verfahren des Selektiven Laserschmelzens (SLM). Bei diesem Verfahren wird das pulverförmige Baumaterial, anders als beim oben beschriebenen Selektiven Lasersintern, nicht gesintert, sondern am Bearbeitungspunkt des zu erzeugenden Werkzeugs vollständig geschmolzen. Die Verhärtung des geschmolzenen Materials erfolgt mit dem Abkühlprozess. Wie beim Lasersintern wird das Werkzeug 32, 50 durch sukzessives Absenken der Bauplattform schichtweise aufgebaut. Mittels Selektivem Laserschmelzen können Objekte mit einer weitestgehend riss- und porenfreien Struktur aufgebaut werden, deren Qualität mit herkömmlichen gegossenen Teilen vergleichbar ist. Als Ausgangsmaterialien kommen insbesondere Metalle, wie Werkzeug- oder Edelstahl, Aluminium oder Titan, aber auch Kunststoffe und Keramiken in Betracht.

Durch die Herstellung mittels einem additiven Fertigungsverfahren können in dem hochauflösenden, mehrstufigen Wasserzeichenrelief 54 Erhebungen und Vertiefungen mit scharfen Rändern einer Randbreite von 0,6 mm oder weniger, bevorzugt 0,5 mm oder weniger, besonders bevorzugt 0,4 mm oder weniger erzeugt werden. Die scharf berandeten Erhebungen bzw. Vertiefungen in dem Wasserzeichenrelief 54 der Spritzgusskavität erzeugen scharf berandete Vertiefungen bzw. Erhebungen im Wasserzeicheneinsatz 20, welche ihrerseits bei der Papierherstellung Wasserzeichen mit scharf berandeten hellen bzw. dunklen Motivstrukturen erzeugen.

Weiter erlaubt die Herstellung mittels additivem Fertigungsverfahren die Erzeugung hochauflösender, mehrstufiger Wasserzeichenreliefs 54, die eine hohe mittlere Ortsfrequenz von 0,8 Lp/mm oder mehr, vorzugsweise von 2 Lp/mm bis 3 Lp/mm oder mehr aufweisen. Ganz unabhängig von dem konkret dargestellten Bildinhalt erlauben solch hohe Ortsfrequenzen die Darstellung feinster Bilddetails und hohe Bildschärfe im Wasserzeichen.

Das mehrstufige Wasserzeichenrelief 54 besteht typischerweise aus einer Vielzahl von Bildelementen, die zusammen das gewünschte Bildmotiv bilden. Mit Vorteil ist dabei vorgesehen, dass die Bildelemente des mehrstufigen Wasserzeichenreliefs eine minimale Größe von 0,6 mm x 0,6 mm oder weniger, vorzugsweise von 0,5 mm x 0,5 mm oder weniger, besonders bevorzugt von 0,4 mm x 0,4 mm oder weniger aufweisen. Wie oben erläutert, müssen die Bildelemente selbst dabei nicht quadratisch sein, sondern können allgemeine Formen, beispielsweise lineare, runde, ovale, polygonale, gewellte oder auch unregelmäßige Formen haben.

Die hohe Ortsfrequenz und die kleinen minimalen Abmessungen der Bildelemente des Wasserzeichenreliefs 54 des Spritzgusseinsatzes 30 übertragen sich auf das Spritzgussrelief 22 des Wasserzeicheneinsatzes 20 und damit auch auf das damit hergestellte Wasserzeichenpapier. Auf diese Weise können Wasserzeichenpapiere mit filigranen Bildmotiven und hohen Bildkontrasten erzeugt werden.

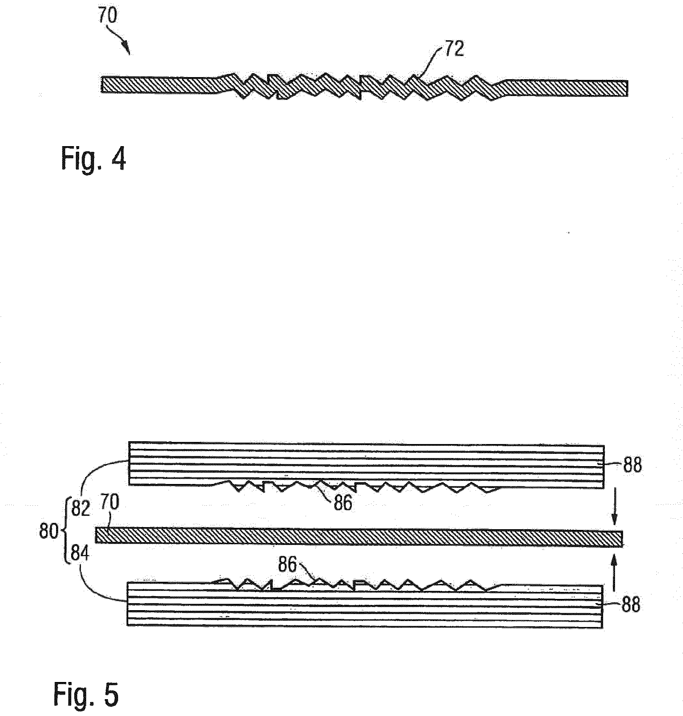

Fig. 4 zeigt ein Entwässerungssieb 70 mit einem Trägersieb, das mit einer hochauflösenden, mehrstufigen Siebprägung 72 versehen ist. Bei dem Entwässerungssieb kann es sich wie bei der zuvor beschriebenen Ausgestaltung um ein Sieb mit einem Siebgewebe aus Metall, insbesondere Bronze handeln, das mindestens ein System miteinander verwobener Kettfäden und quer dazu verlaufender Schussfäden enthält.

Die Erhebungen und Vertiefungen der Siebprägung 72 weisen scharfe Ränder auf, so dass bei der Anlagerung von Papier am Entwässerungssieb 70 eine sehr detailreiche Darstellung eines gewünschten graphischen Motivs, beispielsweise eines Architektur- oder Naturmotivs, erzeugt wird.

Für die Erzeugung der hochauflösenden, mehrstufigen Siebprägung 72 kommt erfindungsgemäß ein besonders hergestellter Prägestock 80 zum Einsatz, der mit Bezug auf die Fig. 5 näher beschrieben wird. Der Prägestock 80 enthält ein Prägestockoberteil 82 und ein Prägestockunterteil 84, die jeweils an ihrer dem Siebgewebe zugewandten Oberfläche mit korrespondierenden hochauflösenden, mehrstufigen Wasserzeichenreliefs 86 in Form des invertierten Siebreliefs 72 versehen sind.

Oberteil und Unterteil des Prägestocks 80 sind einschließlich der hochauflösenden, mehrstufigen Wasserzeichenreliefs 86 durch ein additives Fertigungsverfahren als Schichtenfolge einer Mehrzahl fest miteinander verbundener Materialschichten 88 gebildet. Als additive Fertigungsverfahren kommen dabei die im Zusammenhang mit dem Spritzgusswerkzeug 30 genannten Fertigungsverfahren in Betracht, so dass für Details der Herstellung auf die obigen Ausführungen verwiesen werden kann.

Durch die Herstellung mit einem additiven Fertigungsverfahren können in den hochauflösenden, mehrstufigen Wasserzeichenreliefs 86 Erhebungen und Vertiefungen mit scharfen Rändern einer Randbreite von 0,6 mm oder weniger, bevorzugt 0,5 mm oder weniger, besonders bevorzugt 0,4 mm oder weniger erzeugt werden. Die scharf berandeten Erhebungen bzw. Vertiefungen der Wasserzeichenreliefs 86 erzeugen scharf berandete Vertiefungen bzw. Erhebungen in der Siebprägung 72, welche ihrerseits bei der Papierherstellung Wasserzeichen mit scharf berandeten hellen bzw. dunklen Motivstrukturen erzeugen.

Weiter erlaubt die Herstellung mittels additivem Fertigungsverfahren die Erzeugung hochauflösender, mehrstufiger Wasserzeichenreliefs 86, die eine hohe mittlere Ortsfrequenz von 0,8 Lp/mm oder mehr, vorzugsweise von 2 Lp/mm bis 3 Lp/mm oder mehr aufweisen. Unabhängig von dem konkret dargestellten Bildinhalt erlaubt eine solche hohe Ortsfrequenz die Darstellung feinster Bilddetails und damit hohe Bildschärfe im Wasserzeichen.

Das mehrstufige Wasserzeichenrelief 86 besteht typischerweise aus einer Vielzahl von Bildelementen, die zusammen das gewünschte Bildmotiv bilden, wobei die minimale Größe der Bildelemente durch die Ortsfrequenz vorgegeben ist. Mit Vorteil ist dabei vorgesehen, dass die Bildelemente der mehrstufigen Wasserzeichenreliefs 86 eine minimale Größe von 0,6 mm x 0,6 mm oder weniger, vorzugsweise von 0,5 mm x 0,5 mm oder weniger, besonders bevorzugt von 0,4 mm x 0,4 mm oder weniger aufweisen. Wie oben erläutert, müssen die Bildelemente selbst dabei nicht quadratisch sein, sondern können allgemeine Formen, beispielsweise lineare, runde, ovale, polygonale, gewellte oder auch unregelmäßige Formen aufweisen. Da die minimale Ausdehnung allerdings in jeder Dimension gleich ist, kann die oben genannte minimale Größe für die Bildelemente nicht unterschritten werden.

Die hohe Ortsfrequenz und die kleinen minimalen Abmessungen der Bildelemente des Wasserzeichenreliefs 86 des Prägestocks 80 übertragen sich auf das Siebrelief 72 des Entwässerungssiebs 70 und damit auch auf das damit hergestellte Wasserzeichenpapier. Auf diese Weise können Wasserzeichenpapiere mit filigranen Bildmotiven und hohen Bildkontrasten erzeugt werden.

## Patentansprüche

1. Spritzgusswerkzeug zur Erzeugung eines Wasserzeicheneinsatzes mit einem hochauflösenden, mehrstufigen Spritzgussrelief, wobei das Spritzgusswerkzeug eine Spritzgusskavität enthält, in die zur Erzeugung des Wasserzeichensatzes Kunststoff einspritzbar ist und die mit einem hochauflösenden, mehrstufigen Wasserzeichenrelief in Form des invertierten Spritzgussreliefs versehen ist, und wobei das Spritzgusswerkzeug einschließlich der Spritzgusskavität und des hochauflösenden, mehrstufigen Wasserzeichenreliefs durch ein additives Fertigungsverfahren als Schichtenfolge einer Mehrzahl fest miteinander verbundener Materialschichten gebildet ist.

2. Prägestock zur Erzeugung einer hochauflösenden, mehrstufigen Siebprägung in einem Entwässerungssieb für die Herstellung von Wasserzeichenpapier, wobei der Prägestock mit einem hochauflösenden, mehrstufigen Wasserzeichenrelief in Form der invertierten Siebprägung versehen ist, und wobei der Prägestock einschließlich des hochauflösenden, mehrstufigen Wasserzeichenreliefs durch ein additives Fertigungsverfahren als Schichtenfolge einer Mehrzahl fest miteinander verbundener Materialschichten gebildet ist.

3. Spritzgusswerkzeug oder Prägestock nach Anspruch 1 oder 2, **dadurch gekennzeichnet, dass** das hochauflösende, mehrstufige Wasserzeichenrelief Erhebungen und Vertiefungen mit scharfen Rändern einer Randbreite von 0,6 mm oder weniger, bevorzugt 0,5 mm oder weniger, besonders bevorzugt 0,4 mm oder weniger aufweist.

4. Spritzgusswerkzeug oder Prägestock nach wenigstens einem der Ansprüche 1 bis 3, **dadurch gekennzeichnet, dass** das hochauflösende, mehrstufige Wasserzeichenrelief Bildelemente einer minimalen Größe von 0,6 mm x 0,6 mm oder weniger, vorzugsweise von 0,5 mm x 0,5 mm oder weniger, besonders bevorzugt von 0,4 mm x 0,4 mm oder weniger aufweist.

5. Spritzgusswerkzeug oder Prägestock nach wenigstens einem der Ansprüche 1 bis 4, **dadurch gekennzeichnet, dass** das Spritzgusswerkzeug bzw. der Prägestock als Schichtenfolge einer Mehrzahl fest miteinander verbundener Metallschichten gebildet ist.

6. Spritzgusswerkzeug oder Prägestock nach wenigstens einem der Ansprüche 1 bis 5, **dadurch gekennzeichnet, dass** das hochauflösende, mehrstufige Wasserzeichenrelief eine mittlere Ortsfrequenz von 0,8 Lp/mm oder mehr, vorzugsweise von 2,0 Lp/mm oder mehr, insbesondere von 3,0 Lp/mm aufweist.

7. Verfahren zum Herstellen eines Spritzgusswerkzeugs nach einem der Ansprüche 1, 3 bis 6, bei dem das Spritzgusswerkzeug einschließlich der Spritzgusskavität und des hochauflösenden, mehrstufigen Wasserzeichenreliefs durch ein additives Fertigungsverfahren im Schichtbauverfahren gebildet wird.

8. Verfahren zum Herstellen eines Prägestocks nach einem der Ansprüche 2 bis 6, bei dem der Prägestock einschließlich des hochauflösenden, mehrstufigen Wasserzeichenreliefs durch ein additives Fertigungsverfahren im Schichtbauverfahren gebildet wird.

9. Verfahren nach Anspruch 7 oder 8, **dadurch gekennzeichnet, dass** das Spritzgusswerkzeug bzw. der Prägestock aus einem drahtförmigen, pulverförmigen oder folienförmigen Ausgangsmaterial, aus einer photosensiblen Paste oder einer Flüssigkeit gebildet wird.

10. Verfahren nach wenigstens einem der Ansprüche 7 bis 9, **dadurch gekennzeichnet, dass** als additives Fertigungsverfahren Selektives Lasersintern, Selektives Laserschmelzen, Elektronenstrahlschmelzen, 3D-Druck mit Pulver, Schmelzschichtung, Laserauftragsschweißen, Multi-Jet-Modeling, ein Polyjet-Verfahren, Stereolithographie, Laminated Object Modeling, Film Transfer Imaging oder Digital Light Processing zum Einsatz kommen.

## Claims

1. An injection mold for producing a watermark insert having a high-resolution, multilevel injection molded relief, the injection mold including an injection molding cavity into which plastic is injectable to produce the watermark insert and which is furnished with a high-resolution multilevel watermark relief in the form of the inverted injection molded relief, and the injection mold, including the injection molding cavity and the high-resolution multilevel watermark relief, being formed through an additive manufacturing method as a layer sequence of a plurality of material layers that are firmly joined together.

2. An embossing die for producing a high-resolution, multilevel mold embossing in a dewatering screen for the manufacture of watermark paper, the embossing die being furnished with a high-resolution multilevel watermark relief in the form of the inverted mold embossing, and the embossing die, including the high-resolution multilevel watermark relief, being formed through an additive manufacturing method as a layer sequence of a plurality of material layers that are firmly joined together.

3. The injection mold or embossing die according to claim 1 or 2, **characterized in that** the high-resolution multilevel watermark relief comprises elevations and depressions having sharp edges of an edge width of 0.6 mm or less, preferably 0.5 mm or less, particularly preferably 0.4 mm or less.

4. The injection mold or embossing die according to at least one of claims 1 to 3, **characterized in that** the high-resolution multilevel watermark relief comprises image elements of a minimal size of 0.6 mm x 0.6 mm or less, preferably of 0.5 mm x 0.5 mm or less, particularly preferably of 0.4 mm x 0.4 mm or less.

5. The injection mold or embossing die according to at least one of claims 1 to 4, **characterized in that** the injection mold or the embossing die is formed as a layer sequence of a plurality of metal layers that are firmly joined together.

6. The injection mold or embossing die according to at least one of claims 1 to 5, **characterized in that** the high-resolution multilevel watermark relief has an average spatial frequency of 0.8 Lp/mm or more, preferably of 2.0 Lp/mm or more, especially of 3.0 Lp/mm.

7. A method for manufacturing an injection mold according to one of claims 1, 3 to 6, in which the injection mold, including the injection molding cavity and the high-resolution multilevel watermark relief, is formed in the layer construction method through an additive manufacturing method.

8. A method for manufacturing an embossing die according to one of claims 2 to 6, in which the embossing die, including the high-resolution multilevel watermark relief, is formed in the layer construction method through an additive manufacturing method.

9. The method according to claim 7 or 8, **characterized in that** the injection mold or the embossing die is formed from a starting material in wire form, powder form or foil form, from a photosensitive paste or from a liquid.

10. The method according to at least one of claims 7 to 9, **characterized in that** selective laser sintering, selective laser melting, electron beam melting, 3-D printing with powder, fused deposition modeling, laser metal deposition, multi-jet modeling, a Polyjet method, stereolithography, laminated object modeling, film transfer imaging or digital light processing are used as the additive manufacturing method.

## Revendications

1. Outil de moulage par injection pour la fabrication d'une insertion de filigrane avec un relief moulé par injection multiétagé, à haute résolution, sachant que l'outil de moulage par injection contient une cavité de moulage par injection, dans laquelle de la matière plastique peut être injectée pour la fabrication de l'insertion de filigrane et qui est doté d'un relief de filigrane multiétagé, à haute résolution, sous la forme du relief de moulage par injection inversé et sachant que l'outil de moulage par injection avec la cavité de moulage par injection et le relief de filigrane multiétagé, à haute résolution compris, est formé par un procédé de fabrication additif sous la forme d'une succession de couches d'une pluralité de couches de matériau fermement reliées entre elles.

2. Emporte-pièce à dispositif estampeur pour la production d'une empreinte de crible multiétagée, à haute résolution dans un crible d'égouttage pour la fabrication de papier filigrané, sachant que l'emporte-pièce à dispositif estampeur est doté d'un relief de filigrane multiétagé, à haute résolution sous la forme de l'empreinte de crible inversée et sachant que l'emporte-pièce à dispositif estampeur avec le relief de filigrane multiétagé, à haute résolution compris est formé par un procédé de fabrication additif sous la forme d'une succession de couches d'une pluralité de couches de matériau fermement reliées entre elles.

3. Outil de moulage par injection ou emporte-pièce à dispositif estampeur selon la revendication 1 ou 2, **caractérisé en ce que** le relief de filigrane multiétagé, à haute résolution comporte des bossages et des cavités avec des bords effilés d'une largeur de bord de 0,6 mm ou moins, de préférence 0,5 mm ou moins, de préférence en particulier de 0,4 mm ou moins.

4. Outil de moulage par injection ou emporte-pièce à dispositif estampeur selon au moins l'une quelconque des revendications 1 à 3, **caractérisé en ce que** le relief de filigrane multiétagé, à haute résolution comporte des éléments d'image d'une taille minimale de 0,6 mm x 0,6 mm ou moins, de préférence de 0,5 mm x 0,5 mm ou moins, de préférence en particulier de 0,4 mm x 0,4 mm ou moins.

5. Outil de moulage par injection ou emporte-pièce à dispositif estampeur selon au moins l'une quelconque des revendications 1 à 4, **caractérisé en ce que** l'outil de moulage par injection ou l'emporte-pièce à dispositif estampeur est formé en tant que succession de couches d'une pluralité de couches métalliques fermement reliées entre elles.

6. Outil de moulage par injection ou emporte-pièce à dispositif estampeur selon au moins l'une quelconque des revendications 1 à 5, **caractérisé en ce que** le relief de filigrane multiétagé, à haute résolution comporte une fréquence de lieu moyenne de 0,8 Lp/mm ou plus, de préférence de 2,0 Lp/mm ou plus, de préférence en particulier de 3,0 Lp/mm.

7. Procédé de fabrication d'un outil de moulage par injection selon l'une quelconque des revendications 1, 3 à 6, pour lequel l'outil de moulage par injection avec la cavité de moulage par injection et le relief de filigrane multiétagé, à haute résolution compris est formé par un procédé de fabrication additif dans un procédé de construction en couches.

8. Procédé de fabrication d'un emporte-pièce à dispositif estampeur selon l'une quelconque des revendications 2 à 6, pour lequel l'emporte-pièce à dispositif estampeur avec le relief de filigrane multiétagé, à haute résolution compris est formé par un procédé de fabrication additif dans un procédé de construction en couches.

9. Procédé selon la revendication 7 ou 8, **caractérisé en ce que** l'outil de moulage par injection ou l'emporte-pièce à dispositif estampeur est formé d'un matériau initial en forme de fil, pulvérulent ou en feuilles, d'une pâte photosensible ou d'un liquide.

10. Procédé selon au moins l'une quelconque des revendications 7 à 9, **caractérisé en ce qu'**on utilise comme procédé de fabrication additif, le frittage sélectif par laser, la fusion sélective par laser, la fusion par bombardement électronique, l'impression tridimensionnelle avec poudre, la stratification par fusion, le soudage par rechargement au laser, la modélisation multijet, un procédé PolyJet, la stéréolithographie, la modélisation d'objets laminés, l'imagerie de transfert de film ou le traitement numérique de la lumière.
